# EUROPEAN PATENT SPECIFICATION

(11) **EP 1 944 953 B1**
(45) Date of publication and mention of the grant of the patent: **31.10.2012**
(21) Application number: 07022929.9
(22) Date of filing: 27.11.2007
(51) Int. Cl.: H04M 1/60

(54) **Audio output system and method for information processing terminal**
Audioausgangssystem und Verfahren für ein Informationsverarbeitungsendgerät
Système de sortie audio et procédé pour terminal de traitement d'informations

(30) Priority: 10.01.2007 KR 20070003091
(43) Date of publication of application: 16.07.2008
(73) Proprietor: Samsung Electronics Co., Ltd., Suwon-si, Gyeonggi-do, 443-742 (KR)
(72) Inventor: Yun, Jung A., Gyeonggi-do (KR); Lee, Baekdoosan, Gyeonggi-do (KR); Kim, Hyoung Tae, Gyeonggi-do (KR)
(74) Representative: Harrison Goddard Foote

(56) References cited:
- WO-A-98/12867
- GB-A- 2 347 817
- US-A1- 2004 204 158

## Description

### BACKGROUND OF THE INVENTION

### 1. Field of the Invention

The present invention relates to an information processing terminal and, in particular, to an audio output system and method for an information processing terminal that are capable of selectively outputting an audio signal through an inter-speaker and an external speaker system.

### 2. Description of the Related Art

A navigation system is designed for use in automobiles such that it generates a route from a reference position to a destination in response to a user request and displays a route and direction graphically. Typically, most navigation systems suggest either the quickest or the shortest route between a reference position and a destination position.

With the developments of navigation algorithms, there has been a tremendous increase in use of the navigation terminal and navigation terminals adopting various functions have emerged to satisfy consumer demands.

One of the useful functions required by consumers is a hands-free function kit, and Bluetooth^{®} ("Bluetooth") replaces cable, especially in vehicles.

A Bluetooth module for a navigation terminal enables wireless communication between the navigation terminal and a Bluetooth-enabled mobile phone for supporting the hands-free function.

When the hands-free function is implemented with a Bluetooth-enabled navigation terminal, the navigation terminal allows conversation through an internal speaker phone. However, a conversation output through the speaker of the navigation terminal is limited in output power, and is not expected to guarantee a recognizable conversation, particularly in a noisy environment.

WO 98/12867A discloses a wireless telephone communication device operated in a hands-free mode with detected received audio being relayed for output on the speakers of a radio. A single two-frequency FM transmitter or a multi-frequency transmitter that transmits simultaneously on a plurality of channels relays the audio to the FM radio.

GB-A-2347817 discloses a cordless earphone arrangement for a telephone. The system uses infrared or radio wave as medium for transmitting voice signal from a telephone to a receiver earphone worn by the user, and then uses a microphone to pick up voice messages from the user. Hence, hands-free telephone conversation is possible with either wired or mobile telephones.

US 2004/204158 A1 discloses a mobile phone hand-free extension device which includes a FM radio transmitter with an active frequency searching circuitry to utilize a vehicular FM radio receiver for reproducing the audio signals from the mobile phone. The active frequency searching circuitry automatically detects which frequency band the vehicular FM radio receiver is currently using and sets the RF frequency of the FM transmitter to the detected frequency. The FM transmitter relays the audio signals from the mobile phone by transmitting the audio signals through radio wave to the vehicular FM radio receiver to be reproduced by the speaker of the receiver.

### SUMMARY OF THE INVENTION

The present invention has been made in an effort to solve the above problems, and it is an aspect of the present invention to provide an audio output system and method for an information processing terminal that are capable of outputting an audio signal generated in the information processing terminal or received from a mobile phone, through an external audio system.

It is another aspect of the present invention to provide an audio output system and method for an information processing terminal that are capable of transmitting an audio signal received from a mobile phone to an external audio system through a radio frequency channel.

It is another aspect of the present invention to provide an audio output system and method for an information processing terminal that are capable of transmitting an audio signal generated in the information processing terminal to an external audio system through a radio frequency channel.

It is another aspect of the present invention to provide an audio output system and method for an information processing terminal that are capable of configuring a radio frequency channel for transmitting an audio signal.

It is another aspect of the present invention to provide an audio output system and method for an information processing terminal that are capable of automatically configuring a radio frequency channel for transmitting an audio signal in a range of the frequency spectrum of an external audio system.

In accordance with an aspect of the present invention, there is provided an audio output method in an audio output apparatus, comprising:
establishing a short range wireless communication channel between a mobile terminal and a navigation terminal;
receiving an audio signal from the mobile terminal through the short range wireless communication channel at the navigation terminal;
transmitting the audio signal from the navigation terminal to an in-vehicle audio system when a wireless transmission function of the navigation terminal is enabled; and
outputting the audio signal through the in-vehicle audio system.

In accordance with another aspect of the present invention, there is provided an audio output apparatus comprising:
a mobile terminal for transmitting an audio signal through a short range wireless communication channel;
a navigation terminal for receiving the audio signal transmitted through the short range wireless communication channel and for transmitting the received audio signal to an external audio system through a transmission frequency for wireless transmission when a wireless transmission function of the navigation terminal is enabled; and
an external audio system for receiving the audio signal transmitted by the navigation terminal through the transmission frequency for wireless transmission and for outputting the received audio signal.

### BRIEF DESCRIPTION OF THE DRAWINGS

The above and other objects, features and advantages of the present invention will be more apparent from the following detailed description in conjunction with the accompanying drawings, in which:
FIG. 1 is a schematic block diagram illustrating an in-vehicle hands-free system implemented with a navigation terminal having an audio output system according to an exemplary embodiment of the present invention;
FIG. 2 is a block diagram illustrating a configuration of the navigation terminal of FIG. 1;
FIG. 3 is a flowchart illustrating an audio output method for a navigation terminal according to an exemplary embodiment of the present invention;
FIG. 4 is a flowchart illustrating an audio output procedure of the audio output method using an in-vehicle audio system according to an exemplary embodiment of the present invention;
FIG. 5 is a flowchart illustrating an FM frequency tuning procedure of the audio output method according to an exemplary embodiment of the present invention;
FIGs. 6A to 6D are screen images illustrating FM transmission function on/off states in a hands-free mode of a navigation terminal for an outgoing call according to an exemplary embodiment of the present invention;
FIGs. 7A to 7B are screen images illustrating FM transmission function on/off states in a hands-free mode of a navigation terminal for an incoming call according to an exemplary embodiment of the present invention;
FIGs. 8A and 8B are screen images illustrating an FM transmission function on/off states in a digital broadcast mode of a navigation terminal according to an exemplary embodiment of the present invention;
FIGs. 9A and 9B are screen images illustrating an FM transmission function on/off states in a multimedia playback mode of a navigation terminal according to an exemplary embodiment of the present invention; and
FIGs. 10A and 10B are screen images illustrating an FM transmission function on/off states in a navigation mode of a navigation terminal according to an exemplary embodiment of the present invention.

### DETAILED DESCRIPTION OF THE INVENTION

Exemplary embodiments of the present invention are described with reference to the accompanying drawings in detail. The same reference numbers are used throughout the drawings to refer to the same or like parts. Detailed descriptions of well-known functions and structures incorporated herein may be omitted for clarity and conciseness.

Certain terminologies are used in the following description for convenience and reference only and are not limiting. In the following detailed description, only the exemplary embodiments of the invention have been shown and described, simply by way of illustration of the best mode contemplated by the inventor of carrying out the invention. As will be realized, the invention is capable of modification in various obvious respects, all without departing from the invention. Accordingly, the drawings and description are to be regarded as illustrative in nature and not restrictive.

In this embodiment, an audio output system is implemented in an in-vehicle navigation terminal. The navigation terminal receives an audio signal from a mobile phone through a short range wireless communication technology channel and output the audio signal through a speaker system of the vehicle.

The information processing terminal includes a hands-free terminal, a navigation terminal, and a digital broadcast receiver. In this embodiment, the audio output system is explained with a navigation terminal as an example. In this embodiment, the short range wireless communication technology is represented by Bluetooth, However, the present invention is not limited thereto. For example, the short range wireless communication technology can an infrared (lr) or a Zigbee™ and their equivalent that can establish a short range wireless communication channel.

In this embodiment, the navigation terminal is implemented with a Frequency Modulation (FM) transmitter that can transmit the audio signal to an audio system of a vehicle over an FM radio wave such that the audio system outputs the audio signal through a speaker system as an audible sound wave. The FM transmitter can also transmit the audio signal generated in the navigation terminal. That is, the audio signal includes voice and music sounds received from the mobile phone and announcement sounds (such as an audio signal of a digital broadcast and traffic guide announcements generated by the navigation terminal).

In this embodiment, an apparatus and method for effectively tuning a transmission frequency of the navigation terminal for matching the frequency of the audio system of the vehicle is provided for outputting the audio signal received from the mobile phone through the in-vehicle speaker system.

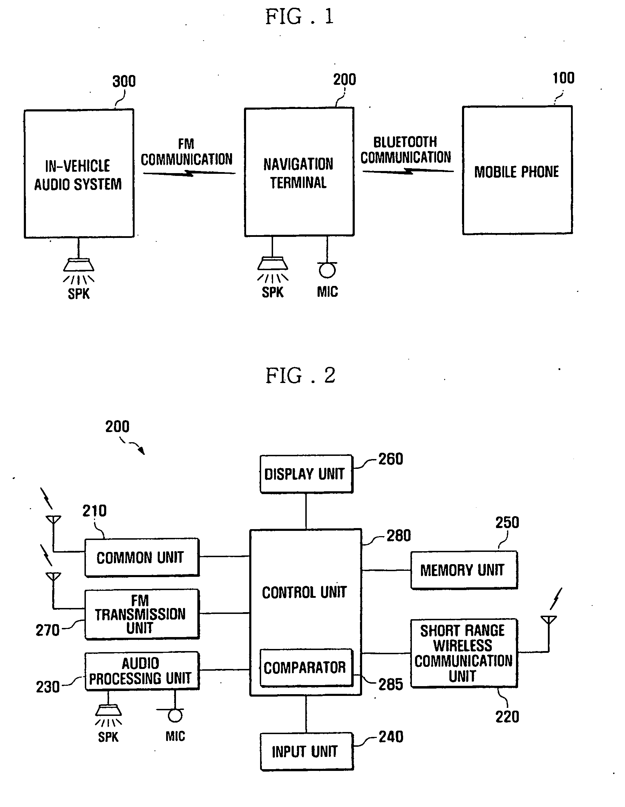

Referring to FIG. 1, the in-vehicle hands-free system is composed of a Bluetooth-enabled mobile phone 100, a Bluetooth-enabled navigation terminal 200 for communicating with the mobile terminal, and an in-vehicle audio system 300. The navigation terminal 200 receives an audio signal from the mobile phone 100 and converts the audio signal into an FM signal and transmits the FM signal to the in-vehicle audio system 300 in accordance with a user configuration such that the FM signal is output through a speaker (SPK) of the in-vehicle audio system as an audible sound wave.

The mobile phone 100 is a normal hand-held phone supporting a voice data communication services. The mobile phone 100 is provided with a Bluetooth module for exchanging audio signal with the navigation terminal 200. The audio signal represents a voice generated during a voice communication with another phone and sounds generated by multimedia applications installed in the mobile phone.

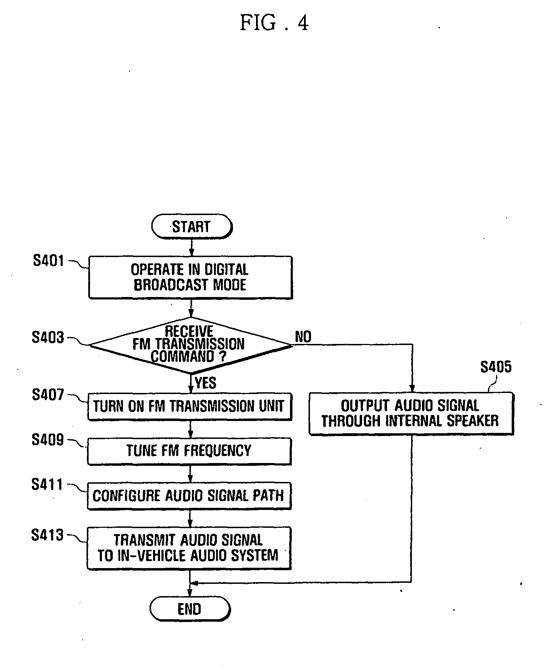

The navigation terminal 200 receives the audio signal from the mobile phone 100 through a Bluetooth channel. The navigation terminal allows outputting the audio signal received from the mobile phone 100 through its built-in speaker (SPK) or transmits the audio signal to the in-vehicle audio system 300. When the navigation terminal 200 is configured to output the audio signal through the in-vehicle audio system 300, the audio signal is transmitted through an FM channel tuned to the in-vehicle audio system 300. An FM tuning operation is described later with reference to FIGs. 2 and 4.

The navigation terminal 200 also can output the audio signal generated in a navigation mode, digital broadcast mode, and multimedia mode through its built-in speaker (SPK) or transmit the audio signal to the in-vehicle audio system 300.

In an in-vehicle audio system output mode, the navigation terminal 200 transmits a predetermined request sound source for frequency synchronization and receives a reply sound source from the in-vehicle audio system 300 in response to the audio signal through its microphone (MIC). In this manner, the in-vehicle audio system 300 is tuned to a frequency band of the navigation terminal 200. After the in-vehicle audio system 300 is tuned, the navigation terminal 200 determines whether the request sound source and the reply sound source are identical, and, when the sound sources are determined to be identical at a certain frequency band, the navigation terminal 200 sets this certain frequency band as a dedicated FM channel.

The in-vehicle audio system 300 includes an FM receiver and a speaker for output a FM signal as an audible sound wave. The in-vehicle audio system 300 receives the FM signal transmitted by the navigation terminal 200 and outputs the FM signal as the audible sound wave through its speaker (SPK).

When the in-vehicle audio system 300 is equipped with a Bluetooth module, the in-vehicle audio system 300 can exchange signals with the navigation terminal 200 through a Bluetooth channel.

The navigation terminal 200 enables outputting audio signals input in a voice communication mode and generated in other operation mode through the in-vehicle audio system 300, especially in a noisy environment, resulting in production of much clearer sound. The navigation terminal 200 also allows the user to turn on or off the FM transmission function on a screen, which the user can selectively turn on and off in consideration of the ambient conditions. Also, the automatic tuning of the frequency between the navigation terminal 200 and the in-vehicle audio system provides more user convenience.

The in-vehicle hands-free system depicted in FIG 1 is only an exemplary embodiment. However, the present invention is not limited thereto. For example, the external speaker output function of the present invention can be implemented with other information processing devices such as a digital broadcast receiver and hands-free kit. Also, the wireless interface between the navigation terminal and the in-vehicle audio system 300 can be implemented with other short range wireless communication technologies or a cable connection.

The internal configuration of the navigation terminal 200 is described in more detail. An explanation about well-known functions of a typical navigation terminal is omitted, but structures and functions associated with the present invention are described in detail. Such structures and functions can be adopted to other types of information processing devices such as hands-free terminal and digital broadcast receiver.

Referring to FIG. 2, the navigation terminal 200 according to the present invention includes a common unit 210, a short range wireless communication unit 220, an audio processing unit 230, an input unit 240, a memory unit 250, a display unit 260, an FM transmission unit 270, and a control unit 280.

The common unit 210 includes modules for performing a typical navigation function. The common unit 210 searches the shortest route using information on a current position and destination position and displays the shortest route as an optimum route, In order to obtain the position information, a Global Positioning System (GPS) is used,

The short range wireless communication module 220 enables a wireless communication with another device. For example, the short range wireless communication module 220 establishes a communication channel with a mobile phone 100 so as to exchange the audio signal representing the voice and music signals. The short range wireless communication module 220 can be implemented with a Bluetooth, infrared (lr), Zigbee, or their equivalent.

The audio processing unit 230 processes the audio signal received through the short range wireless communication unit 220 or generated in the navigation terminal 200 and outputs the processed audio signal through a speaker (SPK) as an audible sound wave; and processes sound wave input through a microphone (M1C) and outputs the processed sound wave to the control unit 280 as an audio signal.

The input unit 240 is provided with a plurality of alphanumeric keys for receiving user inputs and commands for configuring and executing various functions of the navigation terminal 200. The input unit 240 includes a keypad and a touchpad provided in accordance with a design of the navigation terminal 200. The input unit 240 also can include a touchscreen adopted to the display unit 260. In this case, the display unit 260 is included in the input unit 240. The touchpad or touchscreen is useful especially when the user manipulates the navigation function and selects an audio output mode.

The memory unit 250 stores application programs for executing operations associated with the audio output function such as FM transmission, FM frequency scan, and audio output path configuration; and application data configured by a user such as a map and registered position and FM bands. The memory unit 250 stores configuration information associated with the FM transmission function. The memory unit 250 also includes at least one buffer for buffering data generated while executing the application programs.

The display unit 260 displays screen image for presenting operation states of the application programs such as a map screen, a route guidance screen, various menu screens, a communication status screen, a digital broadcast image screen, and function configuration screens, under the control of the control unit 280. The display unit 260 can be implemented with a Liquid Crystal Display (LCD) in the form of a touchscreen. In this case, the display unit is included in the input unit 240.

The FM transmission unit 270 is responsible for transmitting the audio signal received through the short range wireless communication unit 220 to the in-vehicie audio system 300. The FM transmission unit 270 transmits the audio signal through a predetermined frequency band. The FM transmission unit 270 can scan an FM frequency spectrum to find a dedicated frequency band assigned by the in-vehicle audio system and transmits the audio signal through the dedicated frequency band.

In order to find the dedicated frequency, the FM transmission unit 270 transmits a predetermined sound source through all frequencies in the FM frequency spectrum (for example, 87.0MHz - 108.8MHz) in a sequential increment order from a lowest frequency (for example, 87.0MHz) to a highest frequency (108.8MHz), the frequency increasing in units of 0.1MHz.

The control unit 280 controls general operations of the navigation terminal 200 and signaling between the internal units of the navigation terminal 200. That is, the control unit 280 controls the cooperative signaling between the common unit 210, short range wireless communication unit 220, audio processing unit 230, input unit 240, memory unit 250, display unit 260, and FM transmission unit 270. The control unit 280 can incorporate a Digital Signal Processor (DSP) for processing digital signals.

The control unit 280 controls the on/off states of the FM transmission unit 270 and configures the audio signal output path according to the on/off states. The control unit 280 controls the frequency scan for searching the dedicated frequency band. That is, the control unit 280 controls the overall operations for establishing a dedicated FM channel between the navigation terminal 200 and the in-vehicle audio system 300.

The control unit 280 temporarily records a transmit frequency through which a request sound source is transmitted and detects a reception of a response sound source. When the response sound source is received and is identical to the request sound source, the control unit 280 sets the frequency through which the request sound source is transmitted to the dedicated frequency band for transmitting the audio signal. In order to tune the frequency, the control unit includes a comparator 285 which compares the request sound source and the reply sound source.

For simplifying the explanation, although not shown, the navigation terminal 200 can include further functional modules such as a digital broadcast receiver.

The audio output method for the above-structured navigation terminal is described hereinafter in detail. The audio output method includes a procedure for transmitting the audio signal received from the mobile phone 100 to the in-vehicle audio system 300, a procedure for transmitting the audio signal generated in the navigation terminal 200 to the in-vehicle audio system 300, a procedure for automatically tuning a frequency band between the navigation terminal 200 and the in-vehicle audio system.

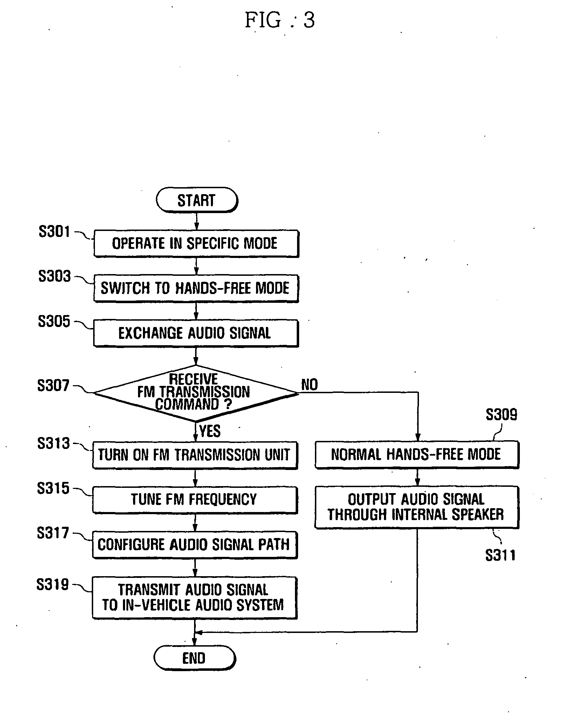

FIG. 3 is a flowchart illustrating an audio output method for a navigation terminal according to an exemplary embodiment of the present invention.

The navigation terminal can be switched between a navigation mode, a digital broadcast mode, a multimedia playback mode for playing audio and video files, and hands-free mode. In this embodiment, it is assumed that the navigation terminal operates in the navigation mode after it is turned on.

Although the operation modes of the navigation terminal are explained separately in the following description, the navigation terminal can be configured to operate in a combination of at least two of the operation modes. For example, the navigation terminal can provide a digital broadcast screen while operating in the navigation mode.

Also, the navigation terminal can be configured such that, if a call connection request is received from the mobile phone through the short range wireless communication module or a call command input by a user while operating in navigation mode, the navigation terminal automatically switches the operation mode from the navigation mode to the hands-free mode or activates the hands free function with a mode screen change while maintaining the navigation mode.

In this embodiment, the audio output method of the present invention is described in a situation when the navigation terminal receives a call connection request from the mobile phone or a call command input by a user. if a call connection request or a call command is received, the navigation terminal maintains the navigation mode operation under the hands-free mode screen and enables communication with the mobile terminal. The hands-free mode also can be activated while the navigation terminal operates in a digital broadcast mode or a multimedia playback mode,

Referring to FIG. 3, if a call connection request or a call is received in an on-going operation mode in step S301, the navigation terminal 200 switches the operation mode to the hands-free mode in step S303. At this time, the on-going operation mode can be maintained as a background operation while a hands-free mode is activated with a hands-free mode screen.

Next, the navigation terminal 200 exchanges audio signals with the mobile phone 100 through a short range wireless communication channel in step S305. The navigation terminal 200 outputs the audio signal received from the mobile phone 900 through an internal speaker as an audible sound wave, in the hands-free mode. The audio signal may carry a music sound as well as a voice.

In the hands-free mode, the navigation terminal 200 determines whether a FM transmission command is input in step S307. If no FM transmission command is input, the navigation terminal 200 configures an audio signal path for a normal hands-free operation in step S309 and outputs the audio signal through the speaker of the navigation terminal 200 in step S311. In contrast, if an FM transmission command is input, the navigation terminal 200 turns on the FM transmission unit 270 in step S313 and tunes an FM frequency for transmitting the audio signal in step S315.

After the FM frequency is set, the navigation terminal 200 configures the audio signal path to the FM transmission unit 270 in step S317 for transmitting the audio signal to the in-vehicle audio system 300. In this case, the navigation terminal 200 turns off an amplifier (AMP) connected to the speaker and turns on an amplifier connected to the FM transmission unit 270.

FIG. 4 is a flowchart illustrating an audio output procedure of the audio output method using an in-vehicle audio system according to an exemplary embodiment of the present invention.

The navigation terminal 200 can start, when it turns on, operating in any of the navigation mode, digital broadcast mode, multimedia playback mode, and hands-free mode. In this embodiment, it is assumed that the navigation terminal 200 is initialized in the digital broadcast mode for receiving digital broadcast signals. The navigation terminal 200 can operate in both the digital broadcast mode and navigation mode.

Referring to FIG. 4, the navigation terminal 200 starts operation in the digital broadcast mode in step S401. In the digital broadcast mode, the audio signals are output through the speaker of the navigation terminal 200. While operating in the digital broadcast mode, the mobile terminal determines whether an FM transmission activation command is input in step S403.

If no FM transmission activation command is input, the navigation terminal 200 maintains the audio signal path to the internal speaker in step S405.

In contrast, if an FM transmission activation command is input, the navigation terminal 200 turns on the FM transmission unit 270 in step S407 and then tunes an FM frequency for transmitting the audio signal in step S409.

After the FM frequency is tuned, the navigation terminal 200 switches the audio signal paths to the FM transmission unit 270 in step S411. At this time, the navigation terminal 200 turns off an amplifier connected to the internal speaker and turns on an amplifier connected to the FM transmission unit 270.

After the audio signal path is switched to the FM transmission unit 270, the FM transmission unit 270 transmits the audio signal to the in-vehicle audio system 300 in step S413 such that the audio signal is output through the speaker of the in-vehicle audio system 300 as an audible sound wave.

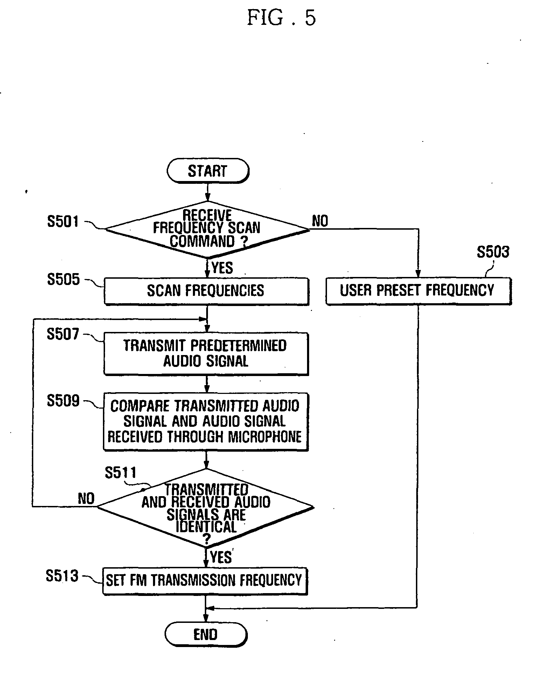

An FM frequency tuning procedure for transmitting the audio signal from the navigation terminal 200 to the in-vehicle audio system is described hereinafter in more detail with reference to FIG. 5. The FM frequency can be tuned manually or automatically.

The navigation terminal 200 tunes an FM frequency with the in-vehicle audio system 300 and then transmits the audio signal through the tuned FM frequency.

The navigation terminal 200 can be configured to directly transmit the audio signal through a preset FM frequency. In a case that the frequency band of the in-vehicle audio system 300 is not tuned to the preset FM frequency, the tuning process is manually performed by the user.

The navigation terminal 200 can be configured to scan the frequency spectrum of the in-vehicle audio system 300 and to be tuned to a frequency assigned by the in-vehicle audio system 300 for transmitting the audio signal.

Referring to FIG. 5, the navigation terminal 200 determines whether a frequency scan command is input in step S501. If no frequency scan command is input, the navigation terminal 200 is tuned to a preset frequency and transmits the audio signal to the in-vehicle audio system 300 through the preset frequency in step S503.

In contrast, if a frequency scan command is input, the navigation terminal 200 starts scanning the frequencies in step S505. At this time, the frequency scanning is performed in the frequency spectrum (for example, 87.0MHz - 108.8MHz) of the in-vehicle audio system in a sequential increment order from a lowest frequency (for example, 87.0MHz) to a highest frequency (108.8MHz), the frequency increasing in unit of 0.1MHz. Whenever the frequency is changed, the navigation terminal 200 temporarily stores the frequency before scanning a next frequency so as to compares a request sound source transmitted through the frequency and a reply sound source. If a frequency is set as a dedicated transmission frequency of the navigation terminal 200, the frequency is recorded in the memory unit 250. Preferably, the frequency scanning is performed by 0.1MHz increments.

The navigation terminal transmits the request sound through every scanning frequency in step S507. That is, when the scanning frequency is changed by 0.1 MHz, the navigation terminal 200 transmits the request sound through the changed frequency and compares the request sound source and a reply sound source received from the in-vehicle audio system through the built-in microphone of the navigation terminal. The in-vehicle audio system 300 receives the request sound source through a frequency and outputs a reply sound source through the speaker of the in-vehicle audio system 300. The navigation terminal 200 receives the reply sound source through a microphone.

If the navigation terminal 200 and the in-vehicle audio system is tuned to the same frequency, the request sound source transmitted by the navigation terminal 200 is output through the speaker of the in-vehicle audio system 300 as an audible sound wave, and the sound wave is input to the microphone of the FM transmission unit of the navigation terminal 200 so as to compare the transmitted request sound source and the received reply sound source.

Next, the navigation terminal 200 compares the audio signal input through the microphone and the transmitted audio signal in step S509 and then determines whether the received audio signal is identical with the transmitted audio signal in step S511. The comparison can be performed in consideration of a volume of the audio sound. The request audio signal can be transmitted through an audible or inaudible sound frequency band. The request audio signal can be a specific sound, music, or voice. If the received reply audio signal is not identical to the transmitted request audio signal, the navigation terminal 200 returns to step S507 for transmitting the audio signal through a next frequency. If the received reply audio signal is identical to the transmitted request audio signal, the navigation terminal determines that the then frequency as the dedicated transmission frequency and set the FM transmission unit 270 to the dedicated transmission frequency in step S513.

When the dedicated transmission frequency is set, the navigation terminal 200 stops the frequency scanning.

A user interface of the navigation terminal 200 is described in association with the above operations hereinafter.

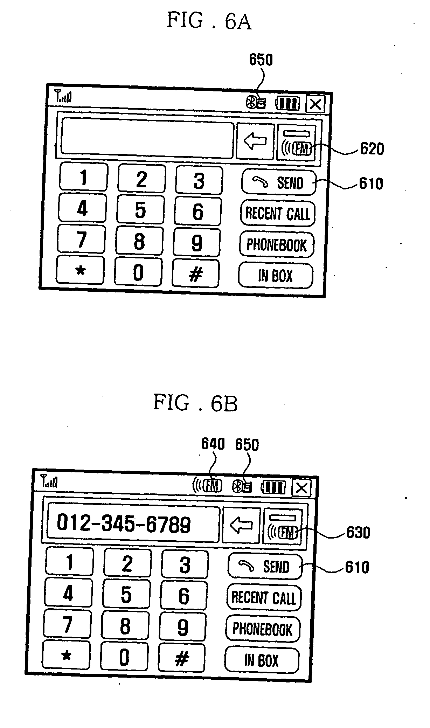

FIGs. 6A to 6D are screen images illustrating FM transmission function on/off states in a hands-free mode of a navigation terminal for an outgoing call according to an exemplary embodiment of the present invention.

A call connection screen is presented when the navigation terminal 200 operates in a hands-free mode. For example, if a call command is input while the navigation terminal 200 operates in a navigation mode, the navigation terminal 200 displays a call connection screen on the display unit 260 as shown in FIGs 6A so as to allow the user to input a target phone number using a touchscreen function. If a send button 610 provided on the call connection screen is clicked, the navigation terminal 200 transmits the call command to the mobile phone 100 through a Bluetooth channel such that the mobile phone 100 performs a call connection request process to another phone represented by a target phone number input by the user. When the navigation terminal 200 and the mobile terminal 100 are connected with each other through the Bluetooth channel, a Bluetooth icon 650 is displayed on the call connection screen.

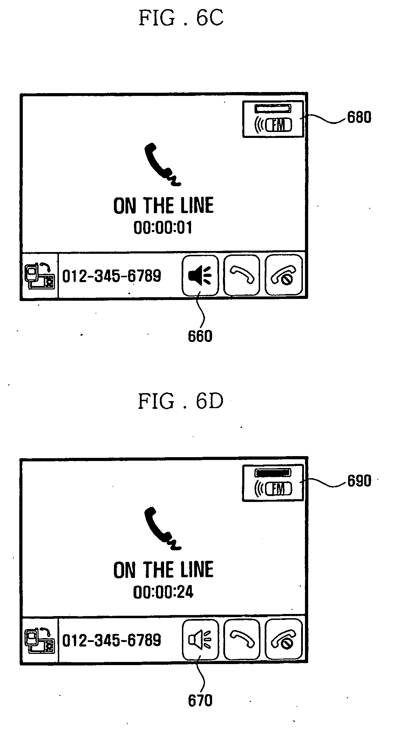

If the mobile terminal 100 is successfully connected to the phone of the target phone number, the navigation terminal 200 changes the call connection screen in a form of FIGs. 6C and 6D.

When the navigation terminal 200 operates in a speaker output mode for outputting the audio signal through the internal speaker of the navigation terminal 200, a highlighted speaker icon 660 displayed as shown in FIG. 6C. In this case, an inverted FM transmission function icon 680 is displayed to inform the user that the FM transmission is disabled.

If the FM transmission function is enabled by a user manipulation for outputting the audio signal through the in-vehicle audio system 300, a highlighted FM transmission function button 630 (680) is displayed as shown in FIGs. 6B and 6D.
The FM transmission function can be enabled while the call connection process is progressing and a communication is on-going. That is, if the inverted FM transmission function button 620 (680) is clicked while the call connection process progresses or the mobile phone communicates with the counterparty phone in the speaker output mode, the navigation terminal enables the FM transmission function and configures the audio signal path to the FM transmission module such that the audio transmits the audio signal to the in-vehicle audio system 300. The FM transmission function button 620 (680) is preferably configured to react a toggle such that the user can easily select the FM transmission function without losing his/her attention to the driving.

The screens associated with the hands-free mode provide a function status indication bar arranging function icons. For example, reference numeral 650 denotes a Bluetooth status icon indicating that the Bluetooth function is enabled, and reference numeral 640 denotes a FM transmission function status icon indicating that the FM transmission function is enabled.

Although not described, the navigation terminal 200 can perform most supplementary functions provided by the mobile phone 300 in interaction with its user interface. The navigation terminal 200 can provide a recent call icon so as to access and display a recent call list stored in mobile phone 100. Also, the navigation terminal 200 can provide a phone book icon allowing the user to search a phone number and a message box icon allowing the user to check and write a message.

While the user interface has been shown and described with reference to an exemplary embodiment, the present invention is not limited to such case. For example, the user interface of the navigation terminal can be modified in various forms for improving user convenience.

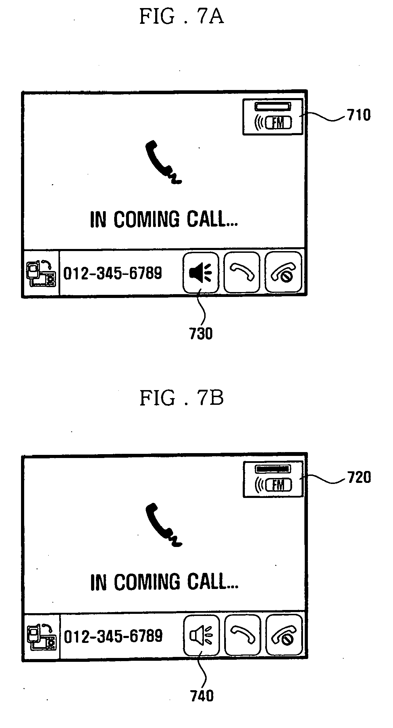

FIGs. 7A to 7B are screen images illustrating FM transmission function on/off states in a hands-free mode of a navigation terminal for an incoming call according to an exemplary embodiment of the present invention.

Referring to FIGs, 7A and 7B, if a call connection request signal is received from the mobile phone 100 through a Bluetooth channel, the navigation terminal 200 enables the hands-free function and displays an incoming call screen on the display unit 260. FIG. 7A shows the incoming call screen when the FM transmission function is disabled, and FIG. 7B shows the incoming call screen when the FM transmission function is enabled.

In FIG. 7A, if the FM transmission function is disabled while the navigation terminal 200 operates in the hands-free mode, the audio signal received from the mobile phone 100 is output through the internal speaker of the navigation terminal 200. When the FM transmission function is disabled, the navigation terminal 200 displays an inverted FM transmission function button 710 for indicating that the FM transmission function is disabled, and an highlighted speaker icon 730 for indicating that the navigation terminal 200 operates in a speaker output mode.

In FIG. 7B, if the FM transmission function is enabled while the navigation terminal 200 operates in the hands-free mode, the audio signal received from the mobile phone 100 is transmitted to the in-vehicle audio system 300 so as to be output through the speaker of the in-vehicle audio system 300 as an audible sound wave. When the FM transmission function is enabled, the navigation terminal 200 displays an highlighted FM transmission function button 720 for indicating that the navigation terminal 200 operates in an FM transmission mode, and an inverted speaker icon 740 in a deactivated state for indicating that the internal speaker of the navigation terminal is turned off.

The FM transmission function can be enabled or disabled by clicking the FM transmission function button 710 at anytime. For example, if the inverted FM transmission function button 710 is clicked while the navigation terminal 200 operates in the speaker output mode, the audio output mode is switched to the FM transmission mode and the FM transmission function button is changed into the highlighted FM transmission function button 720.

When the navigation terminal 200 operates in the FM transmission mode such that the audio signal is output through the speaker of the in-vehicle audio system, the navigation terminal displays the highlighted FM transmission function button 720 and the inverted speaker icon 740.

Although the user interface has been shown and described with reference to an exemplary embodiment, the user interface can be modified to allow supporting the supplementary functions of the mobile phone 100. For example, the incoming call screen can be implemented with various function buttons such as a termination button for allowing the user to terminate the call communication session using the navigation terminal 200 and a call waiting button for allowing the user to received another incoming call without termination of the current call.

The FIGS. 7A and 7B are schematic screen image for simplifying the explanation of the FM transmission function. However, the present invention is not limited thereto, but the interface graphic can be modified in various forms for user convenience.

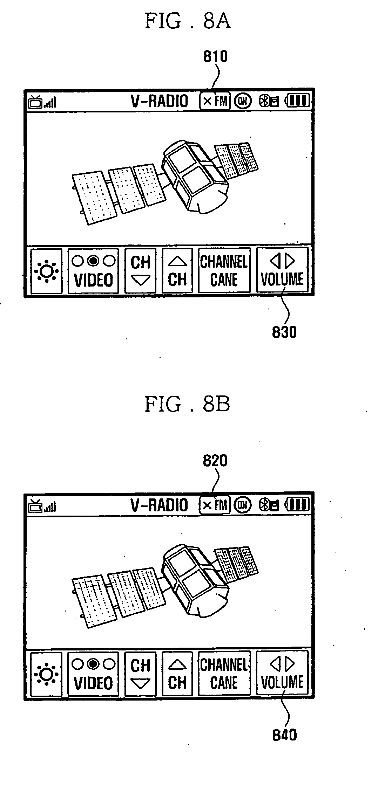

FIGs. 8A and 8B are screen images illustrating an FM transmission function on/off states in a digital broadcast mode of a navigation terminal according to an exemplary embodiment of the present invention.

Referring to FIGs. 8A and 8B, if a digital broadcast reception command is input while the navigation terminal 200 operates in the navigation mode, the navigation terminal 200 switches the operation mode to a digital broadcast mode such that a digital broadcast mode screen is displayed. The digital broadcast mode screen of FIG. 8A is displayed when the FM transmission function is disabled, and the digital broadcast mode screen of FIG. 8B is displayed when the FM transmission function is enabled. In FIG. 8A, the digital broadcast mode screen presents a disabled FM transmission function icon 810 in a function status bar provided on top of the screen. In FIG. 8B, the digital broadcast mode screen presents an enabled FM transmission function icon 820. The digital broadcast mode screen can be displayed together with the navigation mode screen in the form of split windows.

As shown in FIG. 8A, if the FM transmission function is disabled as indicated by the disabled FM transmission function icon 810, the navigation terminal 200 outputs the audio signal of a digital broadcast content through its internal speaker. When the FM transmission function is disabled, an activated volume button 830 is presented in a manipulation panel provided at a bottom of the screen such that the user can adjust the volume of the sound output through the internal speaker using the activated volume button.

As shown in FIG. 8B, however, if the FM transmission function is enabled as indicated by the enabled FM transmission function icon 820, the navigation terminal 200 transmits the audio signal of the digital broadcast content to the in-vehicle audio system 300 through a preset FM channel such that the in-vehicle audio system 300 outputs the audio signal through its speaker. The FM transmission function can be enabled by clicking the disabled FM transmission function icon 810 when the navigation terminal 200 operates in the speaker output mode.

When the FM transmission function is enabled, a deactivated volume button 840 is presented in the manipulation panel. In this case, the volume of the broadcast content can be adjusted using a volume button or a volume dial of the in-vehicle audio system.

Although not shown, the navigation terminal 200 can be implemented with various function menus provided on the digital broadcast mode screen. For example, the navigation terminal 200 allows the user to scan digital broadcast channels, to search and select a digital broadcast channel, and to start and end the digital broadcast mode.

Also, the navigation terminal 200 can be implemented to activate, when a call command is input by the user, the hands free mode while maintaining the digital broadcast mode as a background operation. In this case, the navigation terminal 200 displays a hands-free mode screen as in FIGs. 6A and 6D and transmits the audio signal received from the mobile phone 100. At this time, the audio signal of the broadcast content is preferably muted.

Although FIGs. 8A and 8B are schematically depicted for simplifying the explanation of the FM transmission function, the present invention is not limited thereto. For example, the digital broadcast mode screen can be modified for improving user convenience in various manners.

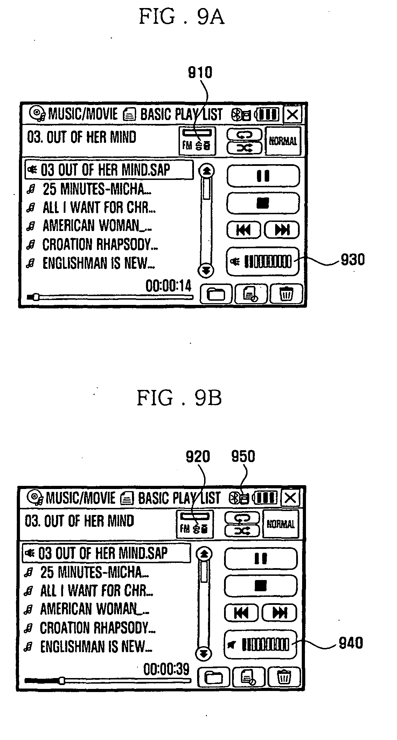

FIGs. 9A and 9B are screen images illustrating an FM transmission function on/off states in a multimedia playback mode of a navigation terminal according to an exemplary embodiment of the present invention.

Referring to FIGs. 9A and 9B, if a multimedia playback command is input while the navigation terminal 200 operates in the navigation mode, the navigation terminal 200 switches the operation mode to a multimedia playback mode such that a multimedia playback mode screen is displayed. The multimedia playback mode screen of FIG. 9A is displayed when the FM transmission function is disabled, and the digital broadcast mode screen of FIG. 9B is displayed when the FM transmission function is enabled. In FIG. 9A, the multimedia playback mode screen presents a disabled FM transmission function button 910. In FIG. 9B, the digital broadcast mode screen presents an enabled FM transmission function button 920. The multimedia playback mode screen can be displayed with the navigation mode screen in the form of split windows.

As shown in FIG. 9A, if the FM transmission function is disabled as indicated by the disabled FM transmission function button 910, the navigation terminal 200 outputs the audio signal of a multimedia file through its internal speaker. When the FM transmission function is disabled, an activated volume control object 930 is presented on the screen such that the user can adjust the volume of the sound output through the speaker using the activated volume control object 930.

As shown in FIG. 9B, if the FM transmission function is enabled as indicated by the enabled FM transmission function button 920, the navigation terminal 200 transmits the audio signal of the multimedia file to the in-vehicle audio system 300 through a preset FM channel such that the in-vehicle audio system outputs the audio signal through its speaker. In this case, an FM transmission function icon 950 is presented on the screen. The FM transmission function can be enabled by clicking the disabled FM transmission function button 910 when the navigation terminal 200 operates in the speaker output mode.

When the FM transmission function is enabled, a disabled volume control object 940 is presented on the screen. In this case, the volume of the multimedia file can be adjusted using a volume button or a volume dial of the in-vehicle audio system.

Although not shown, the navigation terminal 200 can be implemented with various function menus provided on the multimedia playback mode screen. For example, the multimedia playback mode screen can be designed to allow the user to search and select a multimedia file, to wind fast forward and rewind the multimedia file, to delete a file, to create and change a folder, and to display playback progress.

Also, the navigation terminal 200 can be implemented to activate, when a call command is input by the user, the hands-free mode while maintaining the multimedia playback mode as a background operation. In this case, the navigation terminal 200 displays a hands-free mode screen as in FIGs. 6A and 6B and transmits the audio signal received from the mobile phone 100 to the in-vehicle audio system, At this time, the audio signal of the multimedia file is preferably muted.

Although FIGs. 9A and 9B are schematically depicted for simplifying the explanation of the FM transmission function, the present invention is not limited thereto. For example, the multimedia playback mode screen can be modified for improving user convenience in various manners.

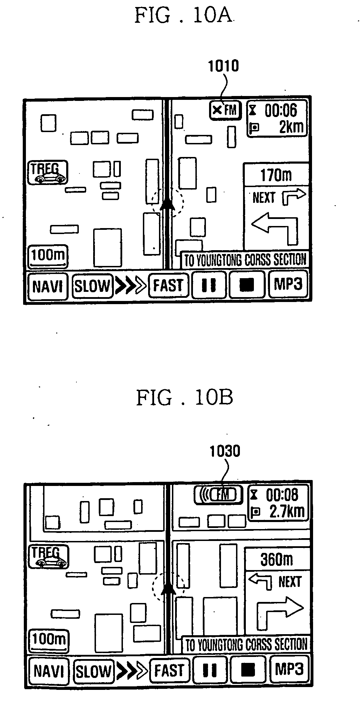

FIGs. 10A and 10B are screen images illustrating an FM transmission function on/off states in a navigation mode of a navigation terminal according to an exemplary embodiment of the present invention.

Referring to FIGS. 10A and 10B, if the navigation mode is activated, a navigation mode screen is displayed. The navigation mode screen of FIG. 10A is displayed when the FM transmission function is disabled, and the navigation mode screen of FIG. 10B is displayed when the FM transmission function is enabled. In FIG. 10A, the navigation mode screen presents a disabled FM transmission function icon 1010, In FIG. 10B, the navigation mode screen presents an enabled FM transmission function icon 1030.

As shown in FIG. 10A, if the FM function is disabled as indicated by the disabled FM transmission function icon 1010, the navigation terminal 200 outputs the audio signal associated with the navigation function such as voice announcements on the traffic information and alert though its internal speaker. In this case, a speaker icon can be displayed for indicating that the audio signal is output through the internal speaker.

As shown in FIG. 10B, if the FM transmission function is enabled as indicated by the enabled FM transmission function button 1030, the navigation terminal 200 transmits the audio signal to the in-vehicle audio system 300 through a preset FM channel such that the in-vehicle audio system outputs the audio signal through its speaker. The FM transmission function can be enabled by clicking the disabled transmission function icon 1010 when the navigation terminal 200 operates in the speaker output mode.

When the FM transmission function is enabled, the navigation terminal 200 displays the enabled FM transmission function icon 1030 on the screen for indicating that the audio signal is output through the speaker of the in-vehicle audio system 300.

Although not shown, the navigation terminal 200 can be implemented with various function menus provided on the navigation mode screen. For example, the navigation mode screen can be designed to allow the user to activate another function, (for example, the multimedia playback function) while maintaining the navigation mode.

Also, the navigation terminal 200 can be implemented to activate, when a call command is input by the user, the hands-free mode while maintaining the multimedia playback mode as a background operation. In this case, the navigation terminal 200 displays a hands-free mode screen as in FIGS. 6A and 6B and transmits the audio signal received from the mobile phone to the in-vehicle audio system. At this time, the audio signal of the navigation function is preferably muted,

Although FIGs. 10A and 10B are schematically depicted for simplifying the explanation of the navigation function, the present invention is not limited thereto. For example, the navigation mode screen can be modified for improving user convenience in various manner.

As described above, an audio output system and method of the present invention enables an information processing terminal to selectively output audio signals, generated in itself or received from a mobile terminal in a hands-free mode, through a speaker of the information processing terminal and an external audio system, thereby improving the hearing and comprehension of the user particularly in a noise environment.

Also, an audio output system and method of the present invention are advantageous in that a user can select a quality of audio output in consideration of the ambient noise.

Also, an audio output system and method for an information processing terminal enable the information processing terminal to be automatically tuned with an external audio system through an FM channel, thereby improving user convenience particularly at the wheel.

Although exemplary embodiments of the present invention are described in detail hereinabove, it should be clearly understood that many variations and/or modifications of the basic inventive concepts herein taught which may appear to those skilled in the present art will still fall within the scope of the present invention, as defined in the appended claims.

## Claims

1. An audio output method in an audio output apparatus, comprising:
establishing a short range wireless communication channel between a mobile terminal (100) and a navigation terminal (200);
receiving an audio signal from the mobile terminal (100) through the short range wireless communication channel at the navigation terminal (200);
transmitting the audio signal from the navigation terminal (200) to an in-vehicle audio system (300) when a wireless transmission function of the navigation terminal is enabled; and
outputting the audio signal through the in-vehicle audio system (300).

2. The audio output method of claim 1, further comprising outputting the audio signal through an internal speaker of the navigation terminal (200) when the wireless transmission function of the navigation terminal is disabled.

3. The audio output method of claim 1, further comprising:
detecting a frequency scan command input by the navigation terminal (200);
searching, when the frequency scan command is detected, a transmission frequency for wireless transmission by scanning a predetermined frequency spectrum in a sequential increment order,
wherein scanning a predetermined frequency spectrum comprises:
transmitting a predetermined sound source through a frequency in the predetermined frequency spectrum;
receiving a reply sound source in response to the predetermined sound source;
comparing the predetermined sound source and the reply sound source;
and
setting, when the predetermined sound source and the reply sound source are identical, a selected frequency whereat the predetermined sound source and the reply sound source are identical as the transmission frequency.

4. The audio output method of claim 3, further comprising at least one of steps:
storing the transmission frequency for wireless transmission in the navigation terminal (200); and
temporarily storing scanned frequency while scanning the frequency spectrum in the navigation terminal.

5. The audio output method of claim 3, wherein the predetermined sound source is continually transmitted through a next frequency in the predetermined frequency spectrum by the navigation terminal (200) when the predetermined sound source and the reply sound source are not identical.

6. The audio output method of claim 1, further comprising converting the received audio signal through the short range wireless communication into a wireless communication signal by the navigation terminal (200).

7. The audio output method of claim 1, further comprising turning off the internal speaker when the wireless communication function is enabled.

8. An audio output apparatus comprising:
a mobile terminal (100) for transmitting an audio signal through a short range wireless communication channel:
a navigation terminal (200) for receiving the audio signal transmitted through the short range wireless communication channel and for transmitting the received audio signal to an external audio system through a transmission frequency for wireless transmission when a wireless transmission function of the navigation terminal is enabled; and
an external audio system (300) for receiving the audio signal transmitted by the navigation terminal through the transmission frequency for wireless transmission and for outputting the received audio signal.

9. The audio output apparatus of claim 8, wherein the navigation terminal (200) further comprises:
a short range wireless communication module (220) for establishing a wireless communication channel with the mobile terminal;
a memory (250) for storing an application program executing the wireless transmission function, data generated in the audio output apparatus and received from external device, configuration information associated with the wireless transmission function, and application data generated while the application program operates;
a display (260) for presenting operation states of the application program through a liquid crystal display screen;
a transmitter (270) for transmitting the audio signal to the external audio system: and
a controller (280) for controlling turn-on/off of the wireless transmission function, an operation of the transmitter, switching an audio signal path to transmit the audio signal to the external audio system.

10. The audio output apparatus of claim 9, wherein the navigation terminal (200) further comprises an internal speaker for outputting the audio signal when wireless transmission is disabled, and a microphone for receiving an audio signal outputted from the external audio system.

11. The audio output apparatus of claim 9, wherein the controller (280) turns off the internal speaker when the wireless transmission function is enabled.

12. The audio output apparatus of claim 10, wherein the controller (280) compares a predetermined sound source transmitted by the navigation terminal (200) to the external audio system (300) and a reply sound source in response to the predetermined sound source received by the microphone and sets a frequency whereat the predetermined sound source and the reply sound source are identical as the transmission frequency for wireless transmission.

13. The audio output apparatus of claim 9, wherein the memory (250) stores the transmission frequency for wireless transmission.

## Patentansprüche

1. Audioausgabeverfahren in einer Audioausgabevorrichtung, das Folgendes beinhaltet:
Aufbauen eines drahtlosen Kurzstreckenkommunikationskanals zwischen einem mobilen Endgerät (100) und einem Navigationsendgerät (200);
Empfangen eines Audiosignals von dem mobilen Endgerät (100) durch den drahtlosen Kurzstreckenkommunikationskanal am Navigationsendgerät (200);
Senden des Audiosignals vom Navigationsendgerät (200) zu einem Bordaudiosystem (300) des Fahrzeugs, wenn eine drahtlose Sendefunktion des Navigationsendgeräts aktiviert ist; und
Ausgeben des Audiosignals durch das Bordaudiosystem (300) des Fahrzeugs.

2. Audioausgabeverfahren nach Anspruch 1, das ferner das Ausgeben des Audiosignals durch einen internen Lautsprecher des Navigationsendgeräts (200) beinhaltet, wenn die drahtlose Sendefunktion des Navigationsendgeräts gesperrt ist.

3. Audioausgabeverfahren nach Anspruch 1, das ferner Folgendes beinhaltet:
Erkennen eines vom Navigationsendgerät (200) eingegebenen Frequenzsuchbefehls;
Suchen, wenn der Frequenzsuchbefehl erkannt ist, einer Sendefrequenz für drahtloses Senden durch Absuchen eines vorbestimmten Frequenzspektrums in einer sequentiellen inkrementalen Reihenfolge,
wobei das Absuchen eines vorbestimmten Frequenzspektrums Folgendes beinhaltet:
Senden einer vorbestimmten Tonquelle durch eine Frequenz in dem vorbestimmten Frequenzspektrum;
Empfangen einer Antworttonquelle als Reaktion auf die vorbestimmte Tonquelle;
Vergleichen der vorbestimmten Tonquelle und der Antworttonquelle; und
Einstellen, wenn die vorbestimmte Tonquelle und die Antworttonquelle identisch sind, einer gewählten Frequenz, auf der die vorbestimmte Tonquelle und die Antworttonquelle mit der Sendefrequenz identisch sind.

4. Audioausgabeverfahren nach Anspruch 3, das ferner wenigstens einen der folgenden Schritte beinhaltet:
Speichern der Sendefrequenz für drahtloses Senden im Navigationsendgerät (200); und
vorübergehendes Speichern der gesuchten Frequenz beim Absuchen des Frequenzspektrums in dem Navigationsendgerät.

5. Audioausgabeverfahren nach Anspruch 3, wobei die vorbestimmte Tonquelle kontinuierlich durch eine nächste Frequenz in dem vorbestimmten Frequenzspektrum durch das Navigationsendgerät (200) übertragen wird, wenn die vorbestimmte Tonquelle und die Antworttonquelle nicht identisch sind.

6. Audioausgabeverfahren nach Anspruch 1, das ferner das Umwandeln des empfangenen Audiosignals durch die drahtlose Kurzstreckenkommunikation in ein drahtloses Kommunikationssignal durch das Navigationsendgerät (200) beinhaltet.

7. Audioausgabeverfahren nach Anspruch 1, das ferner das Abschalten des internen Lautsprechers beinhaltet, wenn die drahtlose Kommunikationsfunktion aktiviert ist.

8. Audioausgabevorrichtung, die Folgendes umfasst:
ein mobiles Endgerät (100) zum Senden eines Audiosignals durch einen drahtlosen Kurzstreckenkommunikationskanal;
ein Navigationsendgerät (200) zum Empfangen des durch den drahtlosen Kurzstreckenkommunikationskanal gesendeten Audiosignals und zum Senden des empfangenen Audiosignals zu einem externen Audiosystem durch eine Sendefrequenz für drahtloses Senden, wenn eine drahtlose Sendefunktion des Navigationsendgeräts aktiviert ist; und
ein externes Audiosystem (300) zum Empfangen des von dem Navigationsendgerät gesendeten Audiosignals durch die Sendefrequenz zum drahtloses Senden und zum Ausgeben des empfangenen Audiosignals.

9. Audioausgabevorrichtung nach Anspruch 8, wobei das Navigationsendgerät (200) ferner Folgendes umfasst:
ein drahtloses Kurzstreckenkommunikationsmodul (220) zum Aufbauen eines drahtlosen Kommunikationskanals mit dem mobilen Endgerät;
einen Speicher (250) zum Speichern eines Anwendungsprogramms, das die drahtlose Sendefunktion ausführt, von in der Audioausgabevorrichtung erzeugten und von dem externen Gerät empfangenen Daten, von mit der drahtlosen Sendefunktion assoziierten Konfigurationsinformationen und von Anwendungsdaten, die erzeugt werden, während das Anwendungsprogramm läuft;
ein Display (260) zum Darstellen von Betriebszuständen des Anwendungsprogramms durch einen Flüssigkristallanzeigeschirm;
einen Sender (270) zum Senden des Audiosignals zum externen Audiosystem; und
eine Steuerung (280) zum Steuern des Ein-/Ausschaltens der drahtlosen Sendefunktion, eines Betriebs des Senders, des Schaltens eines Audiosignalpfades zum Senden des Audiosignals zum externen Audiosystem.

10. Audioausgabevorrichtung nach Anspruch 9, wobei das Navigationsendgerät (200) ferner einen internen Lautsprecher zum Ausgeben des Audiosignals umfasst, wenn drahtloses Senden gesperrt ist, und ein Mikrofon zum Empfangen eines von dem externen Audiosystem ausgegebenen Audiosignals.

11. Audioausgabevorrichtung nach Anspruch 9, wobei die Steuerung (280) den internen Lautsprecher abschaltet, wenn die drahtlose Sendefunktion aktiviert ist.

12. Audioausgabevorrichtung nach Anspruch 10, wobei die Steuerung (280) eine vom Navigationsendgerät (200) zum externen Audiosystem (300) gesendete vorbestimmte Tonquelle und eine Antworttonquelle als Reaktion auf die vom Mikrofon empfangene vorbestimmte Tonquelle vergleicht und eine Frequenz einstellt, auf der die vorbestimmte Tonquelle und die Antworttonquelle mit der Sendefrequenz für drahtloses Senden identisch sind.

13. Audioausgabevorrichtung nach Anspruch 9, wobei der Speicher (250) die Sendefrequenz für drahtloses Senden speichert.

## Revendications

1. Procédé de production audio dans un appareil de production audio, comprenant les opérations consistant à :
établir un canal de communication sans fil de courte portée entre un terminal mobile (100) et un terminal de navigation (200) ;
recevoir, au niveau du terminal de navigation (200), un signal audio en provenance du terminal mobile (100) par l'intermédiaire du canal de communication sans fil de courte portée ;
transmettre le signal audio provenant du terminal de navigation (200) vers un système audio embarqué sur un véhicule (300) lorsqu'une fonction de transmission sans fil du terminal de navigation est activée ; et
diffuser le signal audio par l'intermédiaire du système audio embarqué sur le véhicule (300).

2. Procédé de production audio selon la revendication 1, comprenant en outre la diffusion du signal audio par l'intermédiaire d'un haut-parleur interne du terminal de navigation (200) lorsque la fonction de transmission sans fil du terminal de navigation est désactivée.

3. Procédé de production audio selon la revendication 1, comprenant en outre les opérations consistant à :
détecter une entrée d'instruction de balayage des fréquences, faite par le terminal de navigation (200) ;
lorsque l'instruction de balayage des fréquences est détectée, rechercher une fréquence de transmission en vue d'une transmission sans fil grâce au balayage d'un spectre prédéterminé de fréquences suivant un ordre séquentiel par incréments,
cas dans lequel le balayage d'un spectre prédéterminé de fréquences comprend les opérations consistant à :
transmettre une source sonore prédéterminée par le biais d'une fréquence située dans le spectre prédéterminé de fréquences ;
recevoir une source sonore de réponse, en réaction à la source sonore prédéterminée ;
comparer la source sonore prédéterminée et la source sonore de réponse ; et
lorsque la source sonore prédéterminée et la source sonore de réponse sont identiques, fixer une fréquence sélectionnée au niveau de laquelle la source sonore prédéterminée et la source sonore de réponse sont identiques et la considérer comme la fréquence de transmission.

4. Procédé de production audio selon la revendication 3, comprenant en outre l'une au moins des étapes suivantes :
stocker, dans le terminal de navigation (200), la fréquence de transmission pour une transmission sans fil (200) ; et
stocker provisoirement, dans le terminal de navigation, la fréquence balayée pendant le processus de balayage du spectre de fréquences.

5. Procédé de production audio selon la revendication 3, la source sonore prédéterminée étant transmise en continu par le terminal de navigation (200) par le biais d'une fréquence suivante dans le spectre prédéterminé de fréquences, lorsque la source sonore prédéterminée et la source sonore de réponse ne sont pas identiques.

6. Procédé de production audio selon la revendication 1, comprenant en outre la conversion, par le terminal de navigation (200), du signal audio reçu par l'intermédiaire de la communication sans fil de courte portée en un signal de communication sans fil.

7. Procédé de production audio selon la revendication 1, comprenant en outre la mise hors circuit du haut-parleur interne lorsque la fonction de communication sans fil est activée.

8. Appareil de production audio comprenant :
un terminal mobile (100) pour transmettre un signal audio par l'intermédiaire d'un canal de communications sans fil de courte portée ;
un terminal de navigation (200) pour recevoir le signal audio ayant été transmis par l'intermédiaire du canal de communications sans fil de courte portée et pour transmettre le signal audio reçu à un système audio externe par le biais d'une fréquence de transmission pour transmissions sans fil lorsqu'une fonction de transmission sans fil du terminal de navigation est activée ; et
un système audio externe (300) pour recevoir le signal audio ayant été transmis par le terminal de navigation par le biais de la fréquence de transmission pour transmissions sans fil et pour diffuser le signal audio reçu.

9. Appareil de production audio selon la revendication 8, le terminal de navigation (200) comprenant en outre :
un module de communication sans fil de courte portée (220) pour établir un canal de communication sans fil avec le terminal mobile ;
une mémoire (250) pour stocker un programme applicatif lequel exécute la fonction de transmission sans fil, des données générées dans l'appareil de production audio et reçues à partir d'un dispositif externe, des informations de configuration associées à la fonction de transmission sans fil et des données de l'application lesquelles sont générées pendant que le programme applicatif est opérationnel ;
un afficheur (260) pour présenter les états de fonctionnement du programme applicatif par l'intermédiaire d'un écran de visualisation à cristaux liquides ;
un émetteur (270) pour transmettre le signal audio au système audio externe ; et
un contrôleur (280) pour piloter la mise en circuit/hors circuit de la fonction de transmission sans fil, un mode de fonctionnement de l'émetteur, pour commuter un trajet de signal audio afin de transmettre le signal audio au système audio externe.

10. Appareil de production audio selon la revendication 9, le terminal de navigation (200) comprenant en outre un haut-parleur interne pour diffuser le signal audio lorsque la transmission sans fil est désactivée, et un microphone pour recevoir un signal audio émanant du système audio externe.

11. Appareil de production audio selon la revendication 9, le contrôleur (280) mettant hors circuit le haut-parleur interne lorsque la fonction de transmission sans fil est activée.

12. Appareil de production audio selon la revendication 10, le contrôleur (280) comparant une source sonore prédéterminée transmise par le terminal de navigation (200) vers le système audio externe (300) et une source sonore de réponse en réaction à la source sonore prédéterminée reçue par le microphone et fixant une fréquence au niveau de laquelle la source sonore prédéterminée et la source sonore de réponse sont identiques et la considérer comme la fréquence de transmission pour les transmissions sans fil.

13. Appareil de production audio selon la revendication 9, la mémoire (250) stockant la fréquence de transmission pour des transmissions sans fil.
